# EUROPÄISCHE PATENTSCHRIFT

(11) **EP 0 477 838 B1**
(45) Veröffentlichungstag und Bekanntmachung des Hinweises auf die Patenterteilung: **08.06.1994**
(21) Anmeldenummer: 91116196.6
(22) Anmeldetag: 24.09.1991
(51) Int. Cl.: B66C 1/02, B66F 9/18

(54) **Vakuumheber**
Vacuum hoisting device
Dispositif de levage par vide

(30) Priorität: 26.09.1990 DE 9013526 U
(43) Veröffentlichungstag der Anmeldung: 01.04.1992
(73) Patentinhaber: Bartholomy & Co., D-52355 Düren (DE)
(72) Erfinder: Schmidt, Adolf, W-5160 Düren (DE); Rechener, Karl-Heinz, W-5014 Kerpen-Sindorf (DE)
(74) Vertreter: Paul, Dieter-Alfred, Dipl.-Ing.

(56) Entgegenhaltungen:
- DE-A- 2 354 898
- DE-U- 8 716 723
- GB-A- 1 249 294
- US-A- 3 923 177

## Beschreibung

Die Erfindung betrifft einen Vakuumheber zum Transport von eine Haftfläche aufweisenden Lasten mit wenigstens einem Saugkopf, der an seiner Saugseite mehrere vorstehende Ringdichtungen unter Bildung von durch diese umschlossenen Vakuumräumen hat, die an eine Vakuumquelle mit einem Vakuumerzeuger angeschlossen sind, wobei die Vakuumquelle mit dem bzw. den außenliegenden Vakuumräumen über jeweils ein Steuerventil verbunden ist, das jeweils von einem Taster betätigt ist, der mit dem Steuerventil beim Aufsetzen auf die Last in Öffnungsrichtung und beim Abheben von der Last in Schließrichtung bewegt wird.

Solche Vakuumheber sind in der Regel für den Krananbau bestimmt, werden aber auch an gabelstaplerähnlichen Flurfördergeräten mit Hubmasten, an Balanciergeräten, Manipulatoren, Rollenwender oder dergleichen angebracht. Dabei kommt auch eine Mehrfachanordnung in Frage. Mit ihnen lassen sich u.a. Rollen aus gewickelten Bändern, deren Material beispielsweise Papier, Metall, Kunststoff oder ein Laminat ist, anheben und befördern, und zwar je nach Formgebung des Saugkopfes durch stirnseitiges oder umfangsseitiges An- bzw. Aufsetzen an bzw. auf die liegende oder stehende Rolle. Auch flache Körper, wie beispielsweise Scheiben, lassen sich mit solchen Vakuumhebern umsetzen,

Ein gattungsgemäßer Vakuumheber ist beispielsweise in der DE-GM 84 35 161.6 beschrieben. Er hat als Saugkopf eine ebene Saugplatte, an deren Unterseite konzentrisch mehrere Ringdichtungen im Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung gegeben ist. Dabei müssen die Ringdichtungen nicht kreisförmig sein, sondern können jede andere Form, z.B. ovale oder eckige Form haben, solange sie nur einen geschlossenen Ring bilden. Es ist auch nicht erforderlich, daß sie ineinandergelegt sind. Sie können auch nebeneinanderliegende Vakuumräume umschließen oder auf mehrere Saugplatten verteilt sein.

Die Vakuumräume sind über Öffnungen in der Saugplatte mit einer Vakuumquelle, die einen Vakuumerzeuger, beispielsweise eine Vakuumpumpe, aufweist, verbunden. In die Verbindung zum Vakuumerzeuger ist jedem Vakuumraum - zumindest den Vakuumräumen, die außerhalb des innenliegenden Vakuumraums angeordnet sind - ein Ventil zugeordnet. Jedes Ventil ist mit einem Taster gekoppelt, der die Größe der Haftfläche der Last beim Absenken des Vakuumhebers abtastet. Die Taster sind jeweils so angeordnet, daß durch sie nur die Steuerventile geöffnet werden, deren zugeordneter Vakuumraum beim Aufsetzen auf die Haftfläche vollständig geschlossen wird. Auf die Weise ist gesichert, daß nur die Vakuumräume Verbindung zur Vakuumquelle erhalten, die nach dem Aufsetzen des Vakuumhebers auf die Last geschlossene Ringkammern bilden und in die demnach keine Falschluft angesaugt wird.

Als Taster kommen insbesondere Taststifte in Frage, die durch die Haftfläche der Last beim Ansaugen hochgedrückt werden und auf diese Weise den Ventilteller des Steuerventils hochdrücken, es also öffnen. Dabei hat es sich jedoch als problematisch erwiesen, daß jeweils der Ventilteller und auch der Taststift vor dem Öffnen auf der dem Vakkumraum abgewandten Seite der vollen Vakuumkraft ausgesetzt sind. Es müssen deshalb entsprechend starke Federn vorgesehen werden, die den Ventilteller zuverlässig auf den Ventilsitz drücken und dabei die Vakuumkraft überwinden. Außerdem müssen die Taststifte vakuumdicht geführt werden, was mit entsprechenden Reibungskräften verbunden ist. Beides hat zur Folge, daß der Bewegung des Taststiftes beim Aufsetzen des Vakuumhebers auf die Last erhebliche Kräfte entgegenwirken mit der Folge, daß die Taststifte die Stirnseite der Last beschädigen können.

Hinzu kommt, daß die Reibung der Taststifte in den Führungen des Saugtellers noch dadurch erhöht wird, daß solche Saugteller Durchbiegungen unterworfen sind, weil man bestrebt ist, ihr Eigengewicht möglichst klein zu halten und demnach die Festigkeit bis nahe an die Elastizitätsgrenze auszunutzen. Im Extremfall kann dies sogar zu Verklemmungen führen.

Der Erfindung liegt die Aufgabe zugrunde, einen Vakuumheber der eingangs genannten Art so zu gestalten, daß die Betätigungskräfte für das Steuerventil bzw. die Steuerventile trotz zuverlässiger Abdichtung in geschlossenem Zustand möglichst gering sind.

Diese Aufgabe wird erfindungsgemäß dadurch gelöst, daß jeweils der Taster mit einem in einem Ausgleichzylinder geführten Ausgleichskolben gekoppelt ist, dessen in Schließrichtung gewandte Kolbenseite Verbindung zur Vakuumquelle hat und die in Öffnungsrichtung gewandte Kolbenseite ständige Verbindung zum zugehörigen Vakuumraum hat, wobei vorzugsweise die Fläche des Ausgleichkolbens der Fläche des Ventiltellers des Steuerventils jeweils entspricht.

Mit dieser Konstruktion werden die auf den Ventilteller und den Taster wirkenden Vakuumkräfte bei geschlossenem Steuerventil ausgeglichen, da auf den Taster dieselbe Vakuumkraft in Schließrichtung wirkt, die auf den Ventilteller in Öffnungsrichtung und damit entgegengesetzt wirkt. Wird das Steuerventil geöffnet, so besteht beim Ventilteller keine Druckdifferenz mehr. Auf Grund der Verbindung der in Schließrichtung gewandten Kolbenseite mit dem zugehörigen Vakuumraum tritt auch an dem Ausgleichskolben ein Druckausgleich ein mit der Folge, daß auch dort keine freien Kräfte mehr gegeben sind. Für den sicheren Kontakt des Ventiltellers mit der Ventilöffnung bzw. dem Ventilsitz reichen dann Federn mit relativ geringer Federkraft aus. Zum Öffnen des Ventils mit Hilfe der Taster sind deshalb nur entsprechend geringe Kräfte zu überwinden.

In Ausbildung der Erfindung ist vorgesehen, daß jeweils das Steuerventil einen Ventilteller hat, der an einer Ventilstange sitzt, die hohl ausgebildet und zum zugehörigen Vakuumraum hin offen ist, und daß die Ventilstange Verbindung zu der in Öffnungsrichtung gewandten Kolbenseite des Ausgleichskolbens hat. Auf diese Weise hat diese Kolbenseite ständige Verbindung zu dem zugehörigen Vakuumraum.

Nach der Erfindung ist ferner vorgesehen, daß jeweils der Taster und das Ventil parallel zueinander beweglich gelagert sind und der Taster mit der Ventilstange formschlüssig verbunden ist. Dabei sollten die Ventilstange und/oder der Taster in Schließrichtung federbeaufschlagt sein.

In weiterer Ausgestaltung der Erfindung ist vorgeschlagen, daß der Taster quergeteilt ist, wobei der den Ausgleichskolben tragende Tasterteil in einem vom Saugteller separaten Gehäuse gelagert ist. Dies hat den Vorteil, daß der den Ausgleichskolben tragende Tasterteil vakuumdicht geführt werden kann, da das zugehörige Gehäuse nicht den Verbiegungen des Saugtellers unterliegt, während der andere Tasterteil im Saugteller lose und damit reibungsarm geführt werden kann.

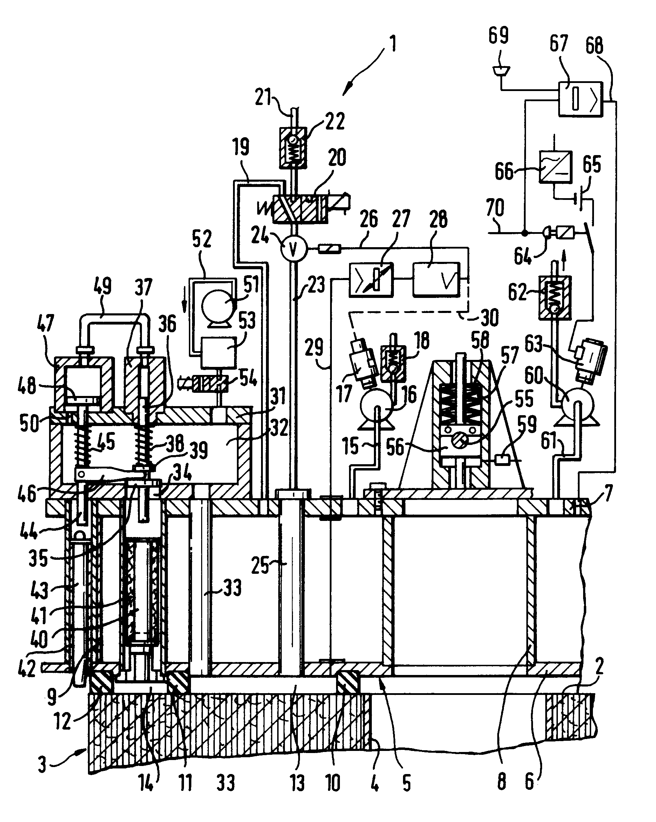

In der Zeichnung ist die Erfindung an Hand eines schematisch im Vertikalschnitt dargestellten Ausführungsbeispiels veranschaulicht. Sie zeigt den linken und mittleren Teil - der rechte Teil ist weggelassen - eines Vakuumhebers (1), der auf der Oberseite (2) einer senkrecht stehenden Papierrolle (3) sitzt, welche innenseitig eine Wickelhülse (4) aufweist. Auf diese Wickelhülse (4) ist die Papierbahn aufgewickelt.

Hauptteil des Vakuumhebers (1) ist ein Vakuumkessel (5), der von oben gesehen kreisrund ausgebildet ist. Er ist als vakuumdichte Schweißkonstruktion ausgeführt und hat als unteren Abschluß einen Saugplatte (6) und obenseitig eine Oberplatte (7). Im mittleren Bereich ist ein Mittelrohr (8) eingesetzt, das den inneren Abschluß des Vakuumkessels (5) bildet. Außenseitig wird der Vakuumkessel (5) von einer umlaufenden Seitenwandung (9) abgeschlossen.

An der Unterseite der Saugplatte (6) sind konzentrisch zur mittleren Vertikalachse des Vakuumhebers (1) drei kreisrunde Ringdichtungen (10̸, 11, 12) aus einem elastomeren Material angebracht. Mit diesen Ringdichtungen (10̸, 11, 12) sitzt der Vakuumheber (1) auf der Oberseite (2) der Papierrolle (3) auf. Die innenliegende Ringdichtung (10̸) hat einen solch großen Durchmesser, daß sie außerhalb der Wickelhülse (4) liegt, so daß über die Wickelhülse (4) keine Falschluft angesaugt werden kann. Mit der weiter außenliegenden, mittleren Ringdichtung (11) bildet die innenliegende Ringdichtung (10̸) einen ringförmigen, innenliegenden Vakuumraum (13). Die außenliegende Ringdichtung (12) bildet mit der mittleren Ringdichtung (11) einen weiteren, ringförmigen und außenliegenden Vakuumraum (14), der von dem innenliegenden Vakuumraum (13) durch die mittlere Ringdichtung (11) getrennt ist. Sofern der Vakuumheber (1) einen größeren Durchmesser hat, können nach außen hin weitere Vakuumräume in entsprechender Weise vorgesehen werden.

Der Vakuumkessel (5) steht über eine Vakuumleitung (15) mit einem Vakuumerzeuger (16) in Verbindung. Der Vakuumerzeuger (16) ist mit einer Drehzahlregeleinrichtung (17) verbunden und hat zudem ein Rückschlagventil (18). Der Vakuumerzeuger (16) hält den als Reservoir dienenden Vakuumkessel (5) ständig auf einem bestimmten Unterdruck.

Von dem Vakuumkessel (5) geht ein Vakuumrohr (19) aus, das zu einem Drei-Wege-Ventil (20̸) führt, das elektromagnetisch betätigbar ist. An das Drei-Wege-Ventil (20̸) ist ein Ausgang (21) - versehen mit einem Rückschlagventil (22) - angeschlossen, mit dem sich eine Verbindung zur freien Atmosphäre herstellen läßt. Ferner ist eine Rohrleitung (23) angeschlossen, in der ein Regelventil (24) angeordnet ist und die in ein Durchgangsrohr (25) mündet. Das Durchgangsrohr (25) durchsetzt den Vakuumkessel (5) und ist zum innenliegenden Vakuumraum (13) hin offen.

Das Regelventil ist mit einer Regelleitung (26) mit einem Meßwertumformer (27) verbunden, der mit einem Meßwertaufnehmer (28) zusammenarbeitet, welcher wiederum über eine den Vakuumkessel (5) durchsetzende Meßleitung (29) Verbindung zum innenliegenden Vakuumraum (13) hat. Eine weitere Steuerleitung (30̸) - gestrichelt dargestellt - ist mit der Drehzahlregeleinrichtung (17) verbunden.

In der gezeigten Stellung des Drei-Wege-Ventils (20̸) hat der Vakuumkessel (5) über das Vakuumrohr (19), das Drei-Wege-Ventil (20̸), die Rohrleitung (23), das Regelventil (24) und das Durchgangsrohr (25) Verbindung zu dem innenliegenden Vakuumraum (13). Er steht also unter vollem Vakuum, wobei das Vakuum mittels des Regelventils (24) auf einen bestimmten Wert eingestellt ist, der über die Meßleitung (29), den Meßwertaufnehmer (28) und den Meßwertumformer (27) erfaßt und an das Regelventil (24) als Regelgröße weitergegeben wird. Eine weitere Beeinflussung des Vakuums geschieht über die Drehzahlregeleinrichtung (17).

Soll das Vakuum im innenliegenden Vakuumraum (13) aufgehoben werden, wird das Drei-Wege-Ventil (20̸) umgeschaltet. Auf diese Weise erhält die Rohrleitung (23), das Durchgangsrohr (25) und damit der innenliegende Vakuumraum (13) über das Rückschlagventil (22) Verbindung zur Atmosphäre, d. h. der innenliegende Vakuumraum (13) wird belüftet. Gleichzeitig wird die vorher bestehende Verbindung zwischen Vakuumleitung (15) und Rohrleitung (23) unterbrochen, d. h. das Vakuum im Vakuumkessel (5) bleibt erhalten.

Im äußeren Bereich ist auf die Oberplatte (7) des Vakuumkessels (5) ein hohler Vakuumblock (31) aufgesetzt. Dessen Innenraum (32) hat über ein den Vakuumkessel (5) durchsetzendes Durchgangsrohr (33) Verbindung zum innenliegenden Vakuumraum (13), d. h. der Innenraum (32) hat immer denselben Druck, wie er im innenliegenden Vakuumraum (13) herrscht.

Der Vakuumblock (31) hat untenseitig eine Ventilöffnung (34), die mit einem Ventilteller (35) zusammenwirkt. Der Ventilteller (35) sitzt auf einer Ventilstange (36), die hohl ausgebildet und an ihrer Unter- und Oberseite offen ist. Die Ventilstange (36) sitzt mit ihrem oberen Ende in einer Ventilstangenführung (37). Eine weitere - hier nicht näher dargestellte - Ventilstangenführung ist im Bereich des unteren Endes der Ventilstange (36) vorgesehen. Die Ventilstange (36) ist im Bereich des Innenraumes (32) von einer druckausübenden Schraubenfeder (38) umgeben, die sich obenseitig an der Ventilstangenführung (37) und untenseitig an einem Bund (39) oberhalb des Ventiltellers (35) abstützt. Der Ventilteller (35) ist somit in Richtung auf die Ventilöffnung (34) druckfederbeaufschlagt.

Die Ventilöffnung (34) setzt sich nach unten hin in einem den Vakuumkessel (5) durchsetzenden Filterrohr (40̸) fort, das in den außenliegenden Vakuumraum (14) mündet. In dem Filterrohr (40̸) ist ein Filtereinsatz (41) angeordnet, durch den von dem außenliegenden Vakuumraum (14) kommende Saugluft strömen kann, wenn der Ventilteller (35) von der Ventilöffnung (34) abgehoben ist.

Außen an der Seitenwandung (9) des Vakuumkessels (5) ist ein Führungsrohr (42) angeordnet, in dem - relativ lose gehalten - ein Taststift (43) vertikal beweglich gelagert ist. Er liegt unmittelbar neben der Außenseite der außenliegenden Ringdichtung (12).

Oberhalb und in axialer Verlängerung des Taststiftes (43) ist eine Betätigungsstange (44) vakuumdicht in der unteren und der oberen Wandung des Vakuumblocks (31) gelagert. Er ist im Bereich des Innenraumes (32) des Vakuumblocks (31) von einer druckausübenden Schraubenfeder (45) umgeben, die die gleiche Federkraft entwickelt wie die Schraubenfeder (38) der Ventilstange (36). Die Schraubenfeder (45) stützt sich an der Oberwandung des Vakuumblocks (31) und untenseitig an einem starr an der Betätigungsstange (44) befestigten Gabelhebel (46) ab. Der Gabelhebel (46) erstreckt sich horizontal bis zur Ventilstange (36) und faßt dort zwischen dem Bund (39) und dem Ventilteller (35) formschlüssig ein. Auf diese Weise macht der Ventilteller (35) die Bewegungen der Betätigungsstange (44) mit.

Die Betätigungsstange (44) ragt nach oben aus dem Vakuumblock (31) in einen Ausgleichszylinder (47) hinein und weist dort endseitig einen in dem Ausgleichszylinder (47) abdichtend laufenden Ausgleichskolben (48) auf, dessen Kolbenfläche derjenigen des Ventiltellers (35) entspricht. Der oberhalb des Ausgleichskolbens (48) befindliche Raum steht über eine Ausgleichsleitung (49) mit der Ventilstangenführung (37) in Verbindung. Der Raum unterhalb des Ausgleichskolbens (48) hat über eine Ausgleichsbohrung (45) Verbindung zu dem Innenraum (32) des Vakuumblocks (31).

Bei größeren Vakuumhebern mit zusätzlichen, außenliegenden Vakuumräumen ist für jeden Vakuumraum eine vorbeschriebene Anordnung vorgesehen, wobei die jeweiligen Vakuumblöcke Verbindung zum jeweils nächsten innenliegenden Vakuumraum haben.

In der gezeigten Darstellung befindet sich der Taststift (43) in seiner untersten Stellung, weil der Durchmesser der Papierrolle (3) gerade eben mit dem Außendurchmesser der außenliegenden Ringdichtung (12) übereinstimmt. Beim Aufsetzen des Vakuumhebers (1) auf die Papierrolle (3) wird somit der Ventilteller (35) nicht hochgehoben. Dabei gleichen sich die auf den Ventilteller (35) in Öffnungsrichtung auf Grund des Vakuums im Innenraum (32) und die über die Ausgleichsbohrung (50̸) auf die Unterseite des Ausgleichskolbens (48) wirkenden Vakuumkräfte wegen des im wesentlichen übereinstimmenden Durchmessers von Ventilteller (35) und Ausgleichskolben (48) aus, d. h. die Betätigungsstange (44) und damit der Gabelhebel (46) wird mit einer Kraft nach unten gedrückt, die der Kraft entspricht, die auf den Ventilteller (35) in Öffnungsrichtung wirkt. Auf Grund dieses Ausgleichs wird der Ventilteller (35) lediglich durch die Schraubenfedern (38, 45) auf die Ventilöffnung (34) gedrückt.

Im Normalfall stimmt der Durchmesser der Papierrolle (3) nicht - wie dargestellt - exakt mit dem Außendurchmesser der außenliegenden Ringdichtung (12) überein. Ist der Durchmesser größer, wird der Taststift (43) beim Aufsetzen des Vakuumhebers (1) noch nicht betätigt, da er nach unten weniger vorsteht als die Ringdichtungen (10̸, 11, 12), selbst wenn sie durch das Eigengewicht des Vakuumhebers (1) etwas zusammengedrückt werden. Erst wenn das Dreiwege-Ventil (20̸) in die gezeigte Stellung gebracht und damit der Vakuumraum (13) mit dem vollen Vakuum beaufschlagt wird, werden die Ringdichtungen (10̸, 11, 12) derart stark komprimiert, daß der Taststift (43) an der Oberseite der Papierrolle zur Anlage kommt und sogar hochgedrückt wird. Dabei überbrückt er auch den Abstand zwischen seinem oberen Ende und dem unteren Ende der Betätigungsstange (42) und nimmt diese mit.

Über den Gabelhebel (46) wird dann der Ventilteller (35) von der Ventilöffnung (34) gegen die Wirkung der Schraubenfedern (38, 45) abgehoben. Auf diese Weise wird der außenliegende Vakuumraum (14) über das Filterrohr (40̸), die Ventilöffnung (34), den Vakuumblock (31) und das Durchgangsrohr (33) ebenfalls unter Vakuum gesetzt. Mit dem Abheben des Ventiltellers (35) findet an diesem auf der Ober- und Unterseite ein Druckausgleich statt, was ohne weitere Maßnahmen zur Folge hätte, daß die an der Unterseite des Ausgleichskolbens (48) wirkende Vakuumkraft bestrebt wäre, die Betätigungsstange (44) und damit auch die Ventilstange (36) wieder nach unten zu drücken. Da jedoch die Ventilstange (36) hohl ausgebildet und eine Verbindung zum Ausgleichszylinder (47) über die Ausgleichsleitung (49) besteht, wird auch der Raum oberhalb des Ausgleichskolbens (48) unter Vakuum gesetzt, so daß die zunächst bestehende Druckdifferenz aufgehoben wird.

Nach Absetzen der Papierrolle (3) wird - wie schon oben beschrieben - der innenliegende Vakuumraum (13) durch Betätigung des Drei-Wege-Ventils (20̸) belüftet. Diese Belüftung wirkt sich auch auf den Innenraum (32) des Vakuumblocks (31) und damit auf den außenliegenden Vakuumraum (14) aus, da der Ventilteller (35) noch geöffnet ist. Beim Abheben des Vakuumhebers (1) fährt der Taststift (43) wieder aus seinem Führungsrohr (42) heraus und senken sich der Ventilteller (35) und die Betätigungsstange (44) auf Grund der Wirkungen der Schraubenfedern (38) bzw. (45) wieder ab, bis der Ventilteller (35) die Ventilöffnung (34) geschlossen hat.

Die vorbeschriebene Situation setzt voraus, daß die Papierrolle (3) einen größeren als den gezeigten Durchmesser hat, so daß der Taststift (43) beim Aufsetzen angehoben wird. Im vorliegenden Ausführungsbeispiel ist dies nicht der Fall, so daß der Taststift (43) in seiner nach unten herausragenden Stellung verbleibt. Dies hat zur Folge, daß die Ventilöffnung (34) geschlossen bleibt, obwohl der außenliegende Vakuumraum (14) durch die Oberseite (2) der Papierrolle (3) geschlossen ist und unter Vakuum gesetzt werden könnte. Der innenliegende Vakuumraum (13) ist jedoch von seiner Fläche so berechnet, daß in diesen Fällen die von ihm ausgehende Saugkraft ausreicht, um die Papierrolle (3) anzuheben und hängend zu transportieren, so daß es der Vakuumbeaufschlagung des außenliegenden Vakuumraums (14) in solchen Fällen nicht bedarf. Beim Absetzen und anschließenden Anheben des Vakuumhebers (1) entsteht jedoch das Problem, daß durch das Ausfedern der Ringdichtungen (11, 12) in dem außenliegenden Vakuumraum (14) ein Vakuum entsteht, da hier - im Gegensatz zum belüfteten innenliegenden Vakuumraum (13) - keine Luft nachfließen kann. Dies kann dazu führen, daß die Papierrolle (3) beim Anheben des Vakuumhebers (1) eine gewisse Strecke mitgenommen wird, bis das sich im außenliegenden Vakuumraum gebildete Vakuum durch Luft, die durch das Material der Papierrolle (3) langsam nachfließt, so weit aufgehoben ist, daß die Papierrolle (3) nicht mehr getragen wird. Sie stürzt dann unkontrolliert ab.

Um dies zu vermeiden, ist ein Preßlufterzeuger (51) vorgesehen, der über eine Preßluftleitung (52) mit einem Preßluftreservoir (53) und über ein Magnetventil (54) mit dem Innenraum (32) des Vakuumblocks (31) verbunden ist. Normalerweise ist das Magnetventil (54) geschlossen. Nach dem Absetzen der Papierrolle (3) und Umschaltung des Drei-Wege-Ventils in die Belüftungsstellung wird das Magnetventil (54) durch eine hier nicht näher dargestellte, automatische Steuerung geöffnet, wenn sich der Druck im Vakuumraum (13) auf nahezu freien Atmosphärendruck erhöht hat. Damit wird der Innenraum (32) des Vakuumblocks (31) und über das Durchgangsrohr (33) der innenliegende Vakuumraum (13) unter Überdruck gesetzt. Ein Abfließen der Luft über die Rohrleitung (23) und das in Belüftungsstellung befindliche Drei-Wege-Ventil (20̸) wird durch das Rückschlagventil (22) verhindert. Der sich in dem innenliegenden Vakuumraum (13) aufbauende Überdruck reicht aus, um den Vakuumheber (1) von der Papierrolle (3) abzuheben und die sich dabei in dem außenliegenden Vakuumraum (14) auf Grund der Ausfederung der Ringdichtungen (11, 12) bildende Vakuumkraft zu überwinden. Es kommt dann nicht mehr zu einer ungewollten Mitnahme der Papierrolle (3). Die Preßluftzufuhr wird sofort gestoppt, nachdem der Vakuumheber (1) abgehoben ist, was durch entsprechende Drucksensoren automatisch gesteuert wird.

Der Vakuumheber (1) ist - was hier nicht näher dargestellt ist - an einem Kranlaufwerk zentrisch aufgehängt. Dessen Unterflasche ist dabei mit einem Tragbolzen (55) verbunden, der über Kulissensteine (56) beweglich in einer Vertikalführung (57) gelagert ist. Untenseitig ist der Tragbolzen (55) verbreitert und stützt sich hierüber nach oben hin an einer Tellerfeder (58) ab. Im unteren Teil der Vertikalführung (57) ist ein Endschalter (59) angeordnet, der betätigt wird, wenn die Kulissensteine (56) ihre untere Endstellung erreichen. Der Endschalter (59) ist über eine hier nicht näher dargestellte Steuerung mit dem Drei-Wege-Ventil (20̸) gekoppelt.

Wenn die Papierrolle (3) abgesetzt wird, wird das Kranlaufwerk schlaff mit der Folge, daß sich die Kulissensteine (56) mit dem Tragbolzen (55) nach unten hin absenken. Mit Betätigen des Endschalters (59) wird das Drei-Wege-Ventil (20̸) aus der gezeigten Stellung, in der der innenliegende Vakuumraum (13) unter Vakuum steht, in die Belüftungsstellung umgeschaltet, so daß automatisch der innenliegende Vakuumraum (13) Verbindung zur Atmosphäre bekommt. Ein weiterer, hier nicht näher dargestellter Endschalter ist mit dem Kranlaufwerk als Schlaffseilsicherung verbunden und schaltet es automatisch ab. Zusätzlich kann der Endschalter (59) auch noch mit dem Magnetventil (54) des Preßlufterzeugers (51) verbunden sein, so daß gleichzeitig der innenliegende Vakuumraum (13) nicht nur belüftet, sondern auch mit Druckluft versorgt wird. Der Vakuumheber (1) kann dann von der Papierrolle (3) abgehoben werden.

Eine Steuerung sorgt dafür, daß, wenn die Kulissensteine (56) den Endschalter (59) verlassen, das Drei-Wege-Ventil (20̸) nicht umgeschaltet wird, vielmehr diese Umschaltung erst nach einem erneuten Absenken des Vakuumhebers (1) auf eine andere Papierrolle und damit ein Absinken der Kulissensteine (56) auf den Endschalter (59) erfolgt. Es kann jedoch auch eine andere Logikschaltung vorgesehen werden bzw. eine Zurückstellung des Drei-Wege-Ventils in die Vakuumstellung nur durch die Bedienungsperson möglich sein.

Der Vakuumheber (1) weist zusätzlich einen Notvakuumerzeuger (60̸) auf, der über eine Notvakuumleitung (61) mit dem Innenraum des Vakuumkessels (5) verbunden ist. Der Notvakuumerzeuger (60̸) ist ebenfalls durch ein Rückschlagventil (62) gesichert. Der Notvakuumerzeuger (60̸) wird von einem Gleichstrommotor (63) angetrieben, der über einen Druckschalter (64) mit einer Batterie (65) verbunden ist. Die Batterie (65) liegt an einem mit der Stromversorgung ständig verbundenen Batterie-Ladegerät (66) an und wird auf diese Weise fortlaufend auf bestem Ladezustand gehalten.

Der Druckschalter (64) ist mit einem Meßwertaufnehmer (67) verbunden, der über eine Meßleitung (68) Verbindung zum Innenraum des Vakuumkessels (5) hat. Der Meßwertumformer (67) ist so eingestellt, daß er dem als Magnetschalter ausgebildeten Druckschalter (64) einen Impuls zum Schließen gibt, wenn über die Meßleitung (68) festgestellt wird, daß das Vakuum im Vakuumkessel (5) einen bestimmten Mindestwert unterschreitet. Dies setzt den Gleichstrommotor (63) und damit den Notvakuumerzeuger (60̸) in Gang, so daß der Abfall des Vakuums im Vakuumkessel (5) wieder kompensiert und das normale Vakuumniveau wieder erreicht wird. Gleichzeitig wird eine Störungsmeldung über einen Signalgeber (69) abgegeben, damit die Bedienungsperson sicher weiß, daß das vom Vakuumerzeuger (16) erzeugte Vakuum für den Transport der Papierrolle (3) nicht ausreichend ist.

Von dem Druckschalter (64) geht noch eine Fernbetätigungsleitung (70̸) aus, über die eine Bedienungsperson den Druckschalter (64) auch unabhängig oder alternativ zu der vorbeschriebenen Automatik betätigen und damit den Notvakuumerzeuger (60̸) in Ganz setzen kann.

Ein Vakuumabfall kann beispielsweise durch Ausfall des Vakuumerzeugers (16) oder auch dadurch entstehen, daß sich die Vakuumgreifeigenschaften einer Papierrolle (3) als Folge ihres zeitabhängigen, viskoelastischen und hygroskopischen Verhaltens so weit verschlechtert haben, daß der Vakuumerzeuger (16) nicht mehr für die Vakuumerzeugung ausreicht. In diesem Fall wirkt der Notvakuumerzeuger (60̸) unterstützend. Zusätzlich kann vorgesehen sein, daß der Notvakuumerzeuger (60̸) auch durch eine Bedienungsperson zugeschaltet wird, wenn dies erforderlich erscheint.

Im übrigen ist unter Vakuum im Sinne dieser Beschreibung ein Druck zu verstehen, der geringer ist als der freie Atmosphärendruck.

## Patentansprüche

1. Vakuumheber (1) zum Transport von eine Haftfläche (2) aufweisenden Lasten (3), mit wenigstens einem Saugkopf (5), der an seiner Saugseite mehrere vorstehende Ringdichtungen (10,11,12) unter Bildung von diese umschlossenen Vakuumräumen hat (13,14), die an einer Vakuumquelle (5,60) mit einem Vakuumerzeuger (16,60) angeschlossen sind, wobei die Vakuumquelle mit dem bzw. den außenliegenden Vakuumräumen (13,14) über jeweils ein Steuerventil (34) verbunden ist, das jeweils von einem Taster (43) betätigt ist, der mit dem zugehörigen Steuerventil (34) beim Aufsetzen auf die Last (3) in Öffnungsrichtung und beim Abheben von der Last in Schließrichtung bewegt wird,
dadurch gekennzeichnet, daß jeweils der Taster (43, 44) mit einem in einem Ausgleichszylinder (47) geführten Ausgleichskolben (48) gekoppelt ist, dessen in Schließrichtung gewandte Kolbenseite Verbindung zur Vakuumquelle (5, 60̸) und dessen in Öffnungsrichtung gewandte Kolbenseite ständige Verbindung zum zugehörigen Vakuumraum (14) hat.

2. Vakuumheber nach Anspruch 1,
dadurch gekennzeichnet, daß die Fläche des Ausgleichskolbens (48) der Fläche des Ventiltellers (35) des Steuerventils entspricht.

3. Vakuumheber nach Anspruch 1 oder 2,
dadurch gekennzeichnet, daß jeweils das Steuerventil einen Ventilteller (35) hat, der an einer Ventilstange (36) sitzt, die hohl ausgebildet und zu dem zugehörigen Vakuumraum (14) hin offen ist, und daß die Ventilstange (36) zu der in Öffnungsrichtung gewandten Kolbenseite des Ausgleichskolbens (48) Verbindung hat.

4. Vakuumheber nach einem der Ansprüche 1 bis 3, dadurch gekennzeichnet, daß jeweils der Taster (43, 44) und das Steuerventil (34, 35) parallel zueinander beweglich gelagert sind und der Taster (43, 44) formschlüssig mit der Ventilstange (36) des Steuerventils (34, 35) verbunden ist.

5. Vakuumheber nach einem der Ansprüche 1 bis 4, dadurch gekennzeichnet, daß jeweils das Steuerventil (34, 35) und/oder der Taster (43, 44) in Schließrichtung federbeaufschlagt sind.

6. Vakuumheber nach einem der Ansprüche 1 bis 5, dadurch gekennzeichnet, daß der Taster (43, 44) quergeteilt ist, wobei der den Ausgleichskolben (48) tragende Tasterteil (44) in einem vom Saugkopf (5) separaten Gehäuse (31) gelagert ist.

## Revendications

1. Elévateur (1) à dépression destiné au transport de charges (3) présentant une surface d'adhérence (2), comportant au moins une tête aspirante (5) munie, sur son côté aspiration, de plusieurs garnitures annulaires d'étanchement (10, 11, 12) saillantes, en formant des chambres de dépression (13, 14) qui sont entourées par lesdites garnitures et sont raccordées à une source de dépression (5, 60) associée à un générateur de dépression (16, 60), la source de dépression étant respectivement reliée à la (aux) chambre(s) de dépression (13, 14) occupant une (des) position(s) extérieure(s) , par l'intermédiaire d'une soupape respective de commande (34) actionnée par un palpeur considéré (43) qui est déplacé dans la direction d'ouverture, avec la soupape de commande (34) associée, lors de la mise en place sur la charge (3), et dans la direction de fermeture lors du soulèvement à l'écart de la charge,
caractérisé par le fait que le palpeur respectif (43, 44) est accouplé à un piston compensateur (48) guidé dans un cylindre de compensation (47), la face dudit piston qui est tournée dans la direction de fermeture étant en liaison avec la source de dépression (5, 60), et sa face qui est tournée dans la direction d'ouverture étant en liaison permanente avec la chambre de dépression (14) associée.

2. Elévateur à dépression selon la revendication 1,
caractérisé par le fait que la surface du piston compensateur (48) correspond à la surface du disque obturateur (35) de la soupape de commande.

3. Elévateur à dépression selon la revendication 1 ou 2,
caractérisé par le fait que la soupape de commande présente respectivement un disque obturateur (35) calé sur une tige d'obturation (36) de réalisation creuse, ouverte en direction de la chambre de dépression (14) associée ; et par le fait que la tige d'obturation (36) est en liaison avec la face du piston compensateur (48) qui est tournée dans la direction d'ouverture.

4. Elévateur à dépression selon l'une des revendications 1 à 3,
caractérisé par le fait que le palpeur (43, 44) et la soupape de commande (34, 35) sont respectivement montés avec mobilité parallèlement l'un à l'autre, et le palpeur (43, 44) est relié par concordance de formes à la tige d'obturation (36) de la soupape de commande (34, 35).

5. Elévateur à dépression selon l'une des revendications 1 à 4,
caractérisé par le fait que la soupape de commande (34, 35) et/ou le palpeur (43, 44) sont respectivement sollicités par ressorts dans la direction de fermeture.

6. Elévateur à dépression selon l'une des revendications 1 à 5,
caractérisé par le fait que le palpeur (43, 44) est scindé dans le sens transversal, la partie (44) dudit palpeur, qui porte le piston compensateur (48), étant montée dans un boîtier (31) distinct de la tête aspirante (5).

## Claims

1. A vacuum lifter (1) for the transport of loads (3) having an adherent surface (2), with at least one suction head (5) which has a plurality of protruding ring seals (10, 11, 12) on its suction face with the formation of vacuum spaces (13, 14) enclosed by the said ring seals and which are connected to a vacuum source (5, 60) with a vacuum generator (16, 60), wherein the vacuum source is connected to the outer vacuum space or vacuum spaces (13, 14) via a control valve (34) in each case, each of which control valves is operated by a sensor (43) which is moved with the associated control valve (34) in the direction of opening when placed on the load (3) and in the direction of closure when lifted off from the load, characterised in that each of the sensors (43, 44) is coupled to a balancing piston (48) guided in a balancing cylinder (47), the piston face of which balancing piston facing the direction of closure is connected to the vacuum source (5, 60) and the piston face of which balancing piston facing the direction of opening is permanently connected to the associated vacuum space (14).

2. A vacuum lifter according to claim 1, characterised in that the area of the balancing piston (48) corresponds to the area of the valve head (35) of the control valve.

3. A vacuum lifter according to claim 1 or 2, characterised in that each control valve has a valve head (35) which is seated on a valve stem (36) which is of hollow construction and which is open to the associated vacuum space (14), and that the valve stem (36) is connected to the piston face of the balancing piston (48) facing the direction of opening.

4. A vacuum lifter according to any one of claims 1 to 3, characterised in that the sensor (43, 44) and the control valve (34, 35) are mounted in each case so that they can move parallel to each other and the sensor (43, 44) is connected with positive fit to the valve stem (36) of the control valve (34, 35).

5. A vacuum lifter according to any one of claims 1 to 4, characterised in that the control valve (34, 35) and/or the sensor (43, 44) are each spring-loaded in the direction of closure.

6. A vacuum lifter according to any one of claims 1 to 5, characterised in that the sensor (43, 44) is transversely split, wherein the sensor part which carries the balancing piston (48) is mounted in a housing (31) separate from the suction head (5).
